# EUROPEAN PATENT SPECIFICATION

(11) **EP 1 289 034 B1**
(45) Date of publication and mention of the grant of the patent: **30.06.2010**
(21) Application number: 00929843.1
(22) Date of filing: 24.05.2000
(51) Int. Cl.: H01M 4/74, B01D 39/10, B21D 13/04

(54) **THIN, MESHY POROUS BODY AND METHOD OF MANUFACTURING THE POROUS BODY**
DÜNNER, NETZARTIG PORÖSER KÖRPER UND HERSTELLUNGSVERFAHREN DAFÜR
CORPS MINCE POREUX MAILLE ET PROCEDE DE FABRICATION DU CORPS POREUX

(43) Date of publication of application: 05.03.2003
(73) Proprietor: Kushibe Manufacturing Co., Ltd, Osaka-shi, Osaka 532-0036 (JP)
(72) Inventor: YAMASHITA, Toshihiko, Osaka-shi, Osaka 532-0033 (JP); MORISHIMA, Masao, Osaka-shi, Osaka 532-0035 (JP)
(74) Representative: Fleuchaus, Michael A.
(86) International application number: PCT/JP2000/003301
(87) International publication number: WO 2001/091212

(56) References cited:
- EP-A1- 0 926 752
- EP-A1- 0 964 465
- EP-A2- 0 813 261
- JP-A- 07 335 208
- JP-A- 11 185 763
- JP-A- 11 257 048
- JP-A- 2000 048 823
- JP-U- 06 079 066

## Description

### Technical Field

The present invention relates to a thin meshy porous body which is made of a metal, a resin, or paper, and which may be used as a core member for a battery electrode, various filter members, or the like, and also to a method of manufacturing such a thin meshy porous body.

### Background Art

Conventionally, as a thin meshy porous body which is made of a metal, and which is used as, for example, a porous electrode core member for a nickel-metal-hydride battery or the like, or various filter members such as an air filter or an oil mist filter, there are a perforated metal and a foamed metal.

In a perforated metal, the framework is formed by a pressing process. Therefore, a perforated metal has merits that its tensile strength is high, that the framework is firm, and that its continuous processing property is excellent. By contrast, perforations are two-dimensionally formed, and, when a perforated metal is used as a core member for a battery electrode, the perforated metal has therefore demerits such as that the volume of the active material is reduced, that the weight of the perforated metal in the electrode core member is large, and that it is difficult to form minute perforations and minute pitches. On the other hand, a foamed metal is obtained by conducting an electroless plating process on a substrate such as urethane foam to provide the substrate with electrical conductivity, then performing electroplating, and thereafter decomposing and removing the substrate. According to the configuration, three-dimensional continuous perforations are formed. When a foamed metal is used as a core member for a battery electrode, therefore, an active material can be filled at a high density. However, foamed metal has demerits such as that the framework is thin and fragile and hence it is difficult to handle a foamed metal, that the framework has a very thin fibrous shape and therefore the flatness is hardly attained, that manufacturing steps are large in number and cumbersome and require a prolonged time period, and that it is difficult to manufacture a long member.

Therefore, it is an object of the invention to provide a thin meshy porous body which is made of a metal, a resin, or paper, which has a section of a three-dimensional structure and a high porosity, which has minute pitches, minute openings, and a firm framework, and which is light in weight. It is another object of the invention to provide a method of manufacturing a thin meshy porous body made of a metal, a resin, or paper which can continuously process a long thin porous body.

### Disclosure of Invention

In the thin meshy porous body of the invention, front and rear faces of a thin plate member made of a metal, a resin or paper are embossed so that a multitude of individual concave and convex portions of a conical shape are formed opposite to each other, and an opening is formed in a tip end of each of said convex, conically shaped portions in at least one face, the plate member having a thickness of 10 to 50 µm, and whereby the concave and convex portions and the openings of the plate member are formed by positive moulding, and the porous body has a thickness of about 550µm and an opening ratio of 45 to 60%.

In the thus configured thin meshy porous body, because of the conical concave and convex portions which are formed in the front and rear faces so as to be opposite to each other, and the openings disposed in the tip ends of each convex portion in at least one face, the porosity is high, and the framework is firm although the body is a very thin plate and has a reduced weight. Because of the conical concave and convex portions, it is possible to obtain a porous body having minute pitches and minute openings.

When the thin meshy porous body made of a metal which has a three-dimensional structure and a high porosity, which is a very thin plate, and which has a reduced weight is used as a porous electrode core member for a nickel-metal-hydride battery or the like, the filling amount of the active material can be enlarged so that the capacity is increased, and the conductivity with respect to the active material is improved, whereby a large capacity and a high output can be obtained. The porous electrode core member which is configured by a firm framework can sufficiently endure volume expansion occurring in a charging or discharging process, and is not cracked or broken even when the member is scrolled or bent so as to agree with a cylindrical or rectangular shape of a battery. Since a porous body which is made of a metal, a resin, or paper, and which has minute pitches and minute openings is obtained, the body can be suitably used also as various filter members, a support for an industrial deodorizing catalyst, or the like.

In manufacturing of the thin meshy porous body of the invention, a thin plate member of a metal, a resin, or paper is passed between a pair of embossing rolls which are rotated in opposite directions in a state where many conical projections formed on surfaces of the rolls are engaged with each other, to emboss front and rear faces of the thin plate member so that conical concave and convex portions are opposite to each other, and at the same time an opening is formed in a tip end of each of the convex portions in at least one face.

According to this configuration, the thin plate member is manufactured by positive molding, and hence the framework is firm, and also the tensile strength is excellent. Therefore, it is possible to continuously process a long porous body.

### Brief Description of Drawings

Fig. 1 is a plan view of a part of a porous body.
Fig. 2 is an enlarged plan view of a part of the porous body.
Fig. 3 is a section view taken along the line A-A in Fig. 2.
Fig. 4 is a section view taken along the line B-B in Fig. 2.
Fig. 5 is a front view of a pair of embossing rolls which are used in a method of manufacturing the porous body.
Fig. 6 is a section view of opposed portions of the pair of embossing rolls shown in Fig. 5.

### Best Mode for Carrying Out the Invention

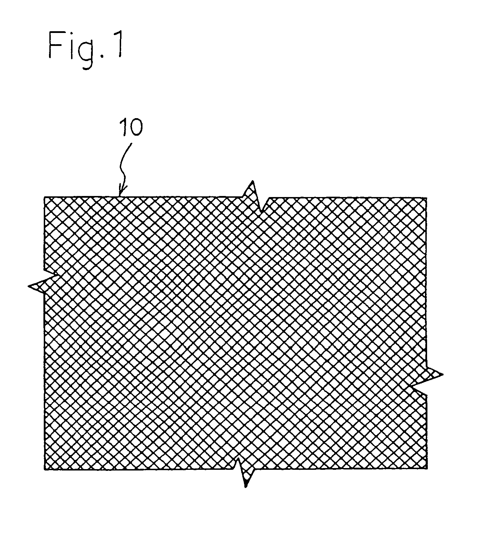

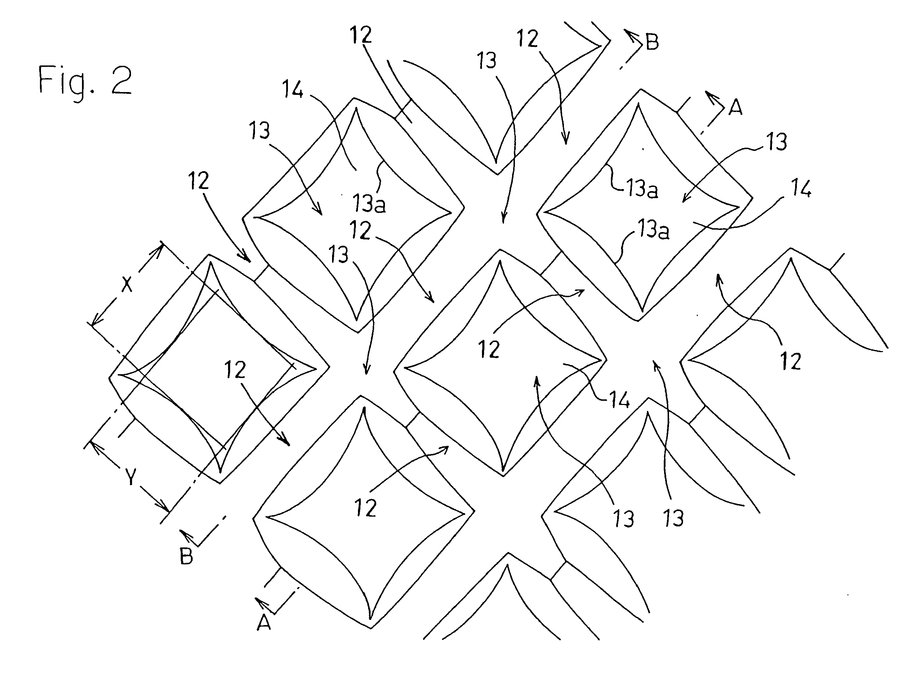

In a thin meshy porous body 10 made of a metal according to the invention, as shown in Figs. 1 to 4, the front and rear faces of a thin plate member 11 of a metal such as iron, stainless steel, nickel, copper, or aluminum are embossed so that concave and convex portions 12 and 13 of a conical shape such as a quadrangular pyramid, a triangular pyramid, or a circular cone are opposite to each other, and an opening 14 is formed in a tip end of each of the convex portions 3 in at least one face as shown in the illustrated example. The porous body exhibits a mesh-like shape as a whole. Alternatively, the opening 14 may be formed in a tip end of each of all the convex portions 13 in both the front and rear faces, not only of the convex portions 13 in the one face.

The thin plate member 11 has a thickness of 10 to 50 µm. In the illustrated example, the opening 14 of each of the convex portions 13 is formed into a substantially square shape. In this case, the longitudinal length (Y) is 360 to 510 µm, the lateral length (X) is 365 to 510 µm, and the opening ratio is 45 to 60%.

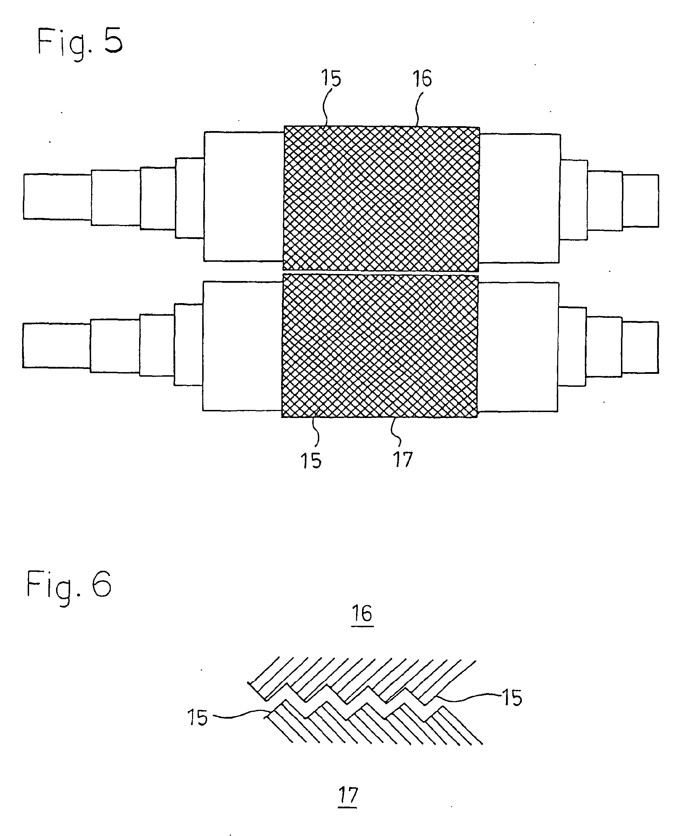

The metal porous body 10 is manufactured in the following manner. As shown in Figs. 5 and 6, a thin metal plate member 1 is interposed between a pair of upper and lower embossing rolls 16 and 17 which are rotated in opposite directions in a state where many conical projections 15 formed on the surfaces of the rolls are engaged with each other, to emboss the front and rear faces of the metal plate member 11 while pressingly feeding the plate member, so that the conical concave and convex portions 12 and 13 are opposite to each other, and at the same time the tip end of each of the convex portions 13 in at least one face is broken through by the tip end of the corresponding conical projection 15 to form the opening 14 in the tip end of the convex portion 13.

The conical projections 15 formed on the embossing rolls 16 and 17 are shaped into a quadrangular pyramid, a triangular pyramid, a circular cone, or the like. In the case where the conical projections 15 have a shape of a quadrangular pyramid, the concave and convex portions 12 and 13 are formed into a quadrangular pyramidal shape, and at the same time the tip end of each of the convex portions 13 is broken through by the tip end of the corresponding conical projection 5 to form the opening 14 which has a substantially rectangular shape. At this time, the convex portion 13 have a petaloid shape in which four petaloid shaped pieces 13a are developed. Since the projections 15 formed in the surfaces of the embossing rolls 16 and 17 are formed into a conical shape such as a quadrangular pyramid, a triangular pyramid, or a circular cone, the concave and convex portions 12 and 13 can be formed at minute pitches which are as small as possible, and the minute opening 14 can be formed in each of the convex portion 13, so that the opening ratio can be enhanced.

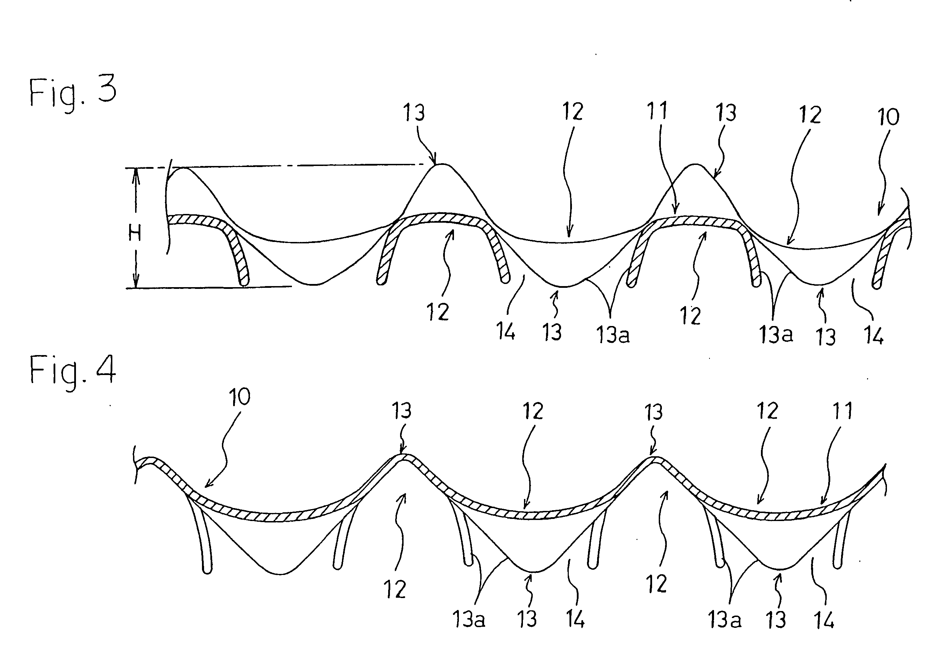

In the metal porous body 10, the front and rear faces are embossed so that the conical concave and convex portions 12 and 13 are opposite to each other, and the opening 14 is formed in the tip end of each of the convex portions 13. When the metal plate member 11 has a thickness of 10 to 50 µm, therefore, the section structure can be three-dimensionally formed to a degree of a thickness (H) of about 550 µm (see Fig. 3), and hence it is possible to obtain the metal porous body 10 of a high porosity. When the metal porous body 10 is used as a porous electrode core member for a nickel-metal-hydride battery, a lithium-ion battery, a lithium polymer battery, a nickel-cadmium battery, or the like, therefore, the filling amount of the active material can be enlarged so that the capacity is increased, and the conductivity with respect to the active material is improved, whereby a large capacity and a high output can be obtained. Since a metal porous body of minute pitches and minute openings can be obtained, moreover, the metal porous body may be suitably used as, in place of a porous electrode core member, for example, various filter members such as an air filter which is a vaporization accelerating part of a kerosene fan heater, or a filter of an oil mist separator, a support for an industrial deodorizing catalyst, or various electromagnetic wave shield members. The porous body is not restricted to a body made of a metal, and the invention may be similarly applied also to a porous body of a resin, paper, or the like.

While the following implementing Examples 1 to 6 describe certain aspects of metal porous bodies in general, they do not form part of the present invention.

### Example 1

In the metal plate member 11 having a thickness of 25 µm made of iron (SPCC), the front and rear faces are embossed so that the concave and convex portions 12 and 13 having a quadrangular pyramidal shape are opposite to each other, and the opening 14 having a substantially rectangular shape is disposed in the tip end of each of the convex portions 13 in only one face. In this case, with respect to the diameter of the opening 14, the longitudinal length (Y) is 382.9 µm, the lateral length (X) is 380.5 µm, the opening ratio is 54.03%, and the thickness (H) after the process (see Fig. 3) is 490.2 µm.

### Example 2

In the metal plate member 11 having a thickness of 25 µm made of iron (SPCC), the front and rear faces are embossed so that the concave and convex portions 12 and 13 having a quadrangular pyramidal shape are opposite to each other, and the opening 14 having a substantially rectangular shape is disposed in the tip end of each of the convex portions 13 in only one face. In this case, with respect to the diameter of the opening 14, the longitudinal length (Y) is 507.3 µm, the lateral length (X) is 514.6 µm, the opening ratio is 54.03%, and the thickness (H) after the process is 490.2 µm.

### Example 3

In the metal plate member 11 having a thickness of 40 µm made of an aluminum foil, the front and rear faces are embossed so that the concave and convex portions 12 and 13 having a quadrangular pyramidal shape are opposite to each other, and the opening 14 having a substantially rectangular shape is disposed in the tip end of each of the convex portions 13 in only one face. In this case, with respect to the diameter of the opening 14, the longitudinal length (Y) is 365.9 µm, the lateral length (X) is 365.9 µm, the opening ratio is 49.57%, and the thickness (H) after the process is 478.0 µm.

### Example 4

In the metal plate member 11 having a thickness of 40 µm made of an aluminum foil, the front and rear faces are embossed so that the concave and convex portions 12 and 13 having a quadrangular pyramidal shape are opposite to each other, and the opening 14 having a substantially rectangular shape is disposed in the tip end of each of the convex portions 13 in only one face. In this case, with respect to the diameter of the opening 14, the longitudinal length (Y) is 482.9 µm, the lateral length (X) is 480.5 µm, the opening ratio is 49.57%, and the thickness (H) after the process is 478.0 µm.

### Example 5

In the metal plate member 11 having a thickness of 20 µm made of a rolled copper foil, the front and rear faces are embossed so that the concave and convex portions 12 and 13 having a quadrangular pyramidal shape are opposite to each other, and the opening 14 having a substantially rectangular shape is disposed in the tip end of each of the convex portions 13 in only one face. In this case, with respect to the diameter of the opening 14, the longitudinal length (Y) is 409.8 µm, the lateral length (X) is 400.0 µm, the opening ratio is 54.28%, and the thickness (H) after the process is 485.4 µm.

### Example 6

In the metal plate member 11 having a thickness of 20 µm made of a rolled copper foil, the front and rear faces are embossed so that the concave and convex portions 12 and 13 having a quadrangular pyramidal shape are opposite to each other, and the opening 14 having a substantially rectangular shape is disposed in the tip end of each of the convex portions 13 in only one face. In this case, with respect to the diameter of the opening 14, the longitudinal length (Y) is 509.8 µm, the lateral length (X) is 507.3 µm, the opening ratio is 54.28%, and the thickness (H) after the process is 485.4 µm.

### Industrial Applicability

The thin meshy porous body of the invention can be suitably used as a core member for a battery electrode, various filter members, or the like.

According to the method of manufacturing a thin meshy porous body of the invention, thin meshy porous bodies can be easily mass-produced by continuous processing.

## Claims

1. A thin meshy porous body (10), wherein front and rear faces of a thin plate member (11) made of a metal, a resin or paper are embossed so that a multitude of individual concave and convex portions (12, 13) of a conical shape are formed opposite to each other, and an opening (14) is formed in a tip end of each ofsaid convex, conically shaped portions (13) in at least one face,
the plate member (11) having a thickness of 10 to 50 µm, and
**characterized in that**
the concave and convex portions (12, 13) and the openings (14) of the plate member (11) are formed by positive moulding, and the porous body (10) has a thickness (H) of about 550µm and an opening ratio of 45 to 60%.

2. A thin meshy porous body (10) according to claim 1, wherein said concave and convex portions (12, 13) are formed into a quadrangular pyramidal shape, said openings are formed into a substantially square shape, a longitudinal length of said openings is 360 to 510 µm and a lateral length is 365 to 510 µm.

3. A method of manufacturing a thin meshy porous body (10), wherein a thin plate member (11) having a thickness of 10 to 50 µm, and made of a metal, a resin or paper is passed between a pair of embossing rolls (16, 17), which are rotated in opposite directions in a state where many conical projections (15) formed on surfaces ofsaid rolls (16, 17) positively engage with each other, to emboss front and rear faces ofsaid plate member (11) so that a multitude of individual conical concave and convex portions (12, 13) are formed opposite to each other, and the tip ends ofsaid conical projections (15) breaking through the tip ends of said convex portions (13), whereby openings (14) are formed in tip ends of each of said convex, conically shaped portions(13) in at least one face so that the thickness (H) of the porous body (10) is about 550µm and the opening ratio is 45 to 60%.

4. A method of manufacturing a thin meshy porous body (10) according to claim 3, wherein said conical projections (15) are formed into a quadrangular pyramidal shape so as to form said concave and convex portions (12, 13) into a quadrangular pyramidal shape and said openings into a substantially square shape having a longitudinal length of 360 to 510 µm and a lateral length of 365 to 510 µm.

## Patentansprüche

1. Dünner netzartiger poröser Körper (10), wobei vordere und hintere Flächen eines aus Metall, einem Kunststoff oder Papier gefertigten dünnen Plattenelementes (11) so geprägt sind, dass eine Vielzahl von einzelnen konkaven und konvexen Abschnitten (12, 13) von konischer Form einander gegenüberliegend ausgebildet sind, und eine Öffnung (14) in einem Spitzenende jedes der konvexen, konisch geformten Abschnitte (13) in wenigstens einer Fläche ausgebildet ist,
wobei das Plattenelement (11) eine Dicke von 10 bis 50 µm hat, und
**dadurch gekennzeichnet, dass**
die konkaven und konvexen Abschnitte (12, 13) und die Öffnungen (14) des Plattenelementes (11) durch Positivformen ausgebildet sind und der poröse Körper (10) eine Dicke (H) von ca. 550 µm und ein Öffnungsverhältnis von 45 bis 60 % hat.

2. Dünner netzartiger poröser Körper (10) gemäß Anspruch 1, wobei die konkaven und konvexen Abschnitte (12, 13) zu einer viereckigen Pyramidenform ausgebildet sind, die Öffnungen zu einer im Wesentlichen quadratischen Form ausgebildet sind, eine longitudinale Länge der Öffnungen 360 bis 510 µm beträgt und eine laterale Länge 365 bis 510 µm beträgt.

3. Verfahren zur Herstellung eines dünnen netzartigen porösen Körpers (10), wobei ein dünnes Plattenelement (11), das eine Dicke von 10 bis 50 µm hat und aus einem Metall, einem Kunststoff oder Papier gefertigt ist, zwischen einem Paar Prägewalzen (16, 17) hindurchgeführt wird, die in einem Zustand, in dem viele auf Oberflächen der Walzen (16, 17) ausgebildete konische Vorsprünge (15) sich in formschlüssigem Eingriff miteinander befinden, in entgegengesetzten Richtungen rotiert werden, um vordere und hintere Flächen des Plattenelementes (11) so zu prägen, dass eine Vielzahl einzelner konischer konkaver und konvexer Abschnitte (12, 13) einander gegenüberliegend ausgebildet werden, und wobei die Spitzenenden der konischen Vorsprünge (15) durch die Spitzenenden der konvexen Abschnitte (13) brechen, wodurch Öffnungen (14) in Spitzenenden von jedem der konvexen, konisch geformten Abschnitte (13) in wenigstens einer Fläche ausgebildet werden, so dass die Dicke (H) des porösen Körpers (10) ca. 550 µm beträgt und das Öffnungsverhältnis 45 bis 60 % beträgt.

4. Verfahren zur Herstellung eines dünnen netzartigen porösen Körpers (10) gemäß Anspruch 3, wobei die konischen Vorsprünge (15) zu einer viereckigen Pyramidenform ausgebildet sind, um die konkaven und konvexen Abschnitte (12, 13) zu einer viereckigen Pyramidenform und die Öffnungen zu einer im Wesentlichen quadratischen Form mit einer longitudinalen Länge von 360 bis 510 µm und einer lateralen Länge von 356 bis 510 µm auszubilden.

## Revendications

1. Un corps poreux maillé fin (10) où des faces avant et arrière d'un membre plaque fin (11) fait en métal, résine ou papier sont gaufrées de sorte qu'une multitude de portions concaves et convexes (12,13) de forme conique sont formées opposées l'une à l'autre et une ouverture (14) est formée dans une extrémité de pointe de chacune dites portions convexes formées de manière conique (13) dans au moins une face ;
le membre plaque (11) ayant une épaisseur de 10 à 500 µm et
**caractérisé en ce que**
les portions concaves et convexes (12,13) et les ouvertures (14) du membre plaque (11) sont formées par moulage positif et le corps poreux (10) a une épaisseur (H) d'environ 550 µm et un ratio d'ouverture de 45 à 60%.

2. Un corps poreux maillé fin (10) selon la revendication 1 où lesdites portions concaves et convexes (12,13) sont formées dans une forme pyramidale quadrangulaire lesdites ouvertures sont formées dans une forme en substance carrée et une longueur longitudinale desdites ouvertures est de 360 à 510 µm et une longueur latérale est de 365 à 510 µm.

3. Un procédé pour fabriquer un corps poreux maillé fin (10) où un membre plaque fin (11) ayant une épaisseur de 10 à 50 m et fait en métal, résine ou papier est passé entre une paire de roulements de gaufrage (16,17) qui sont tournés en direction opposée dans un état où beaucoup de projections coniques (15) formées sur les surfaces desdits roulements (16,17) viennent en contact positivement l'une avec l'autre pour gaufrer des surfaces avant et arrière dudit membre plaque (11) de sorte qu'une multitude de portions concaves et convexes (12,13) de forme conique sont formées opposées l'une à l'autre et les extrémités de pointe desdites projections coniques (15) percent à travers les extrémité de pointe desdites portions convexes (13) par quoi les ouvertures (14) sont formées dans les extrémités de pointe de chacune desdites portions convexes formées de manière conique (13) dans au moins une face de sorte que l'épaisseur (H) du corps poreux (10) est d'environ 550 µm et le ratio d'ouverture de 45 à 60%.

4. Un procédé pour fabriquer un corps poreux maillé fin (10) selon la revendication 3 où les projections coniques (15) sont formées dans une forme pyramidale quadrangulaire de sorte à former lesdites portions concaves et convexes (12,13) dans une forme pyramidale quadrangulaire et lesdites ouvertures dans une forme en substance carrée ayant une longueur longitudinale de 360 à 510 µm et une longueur latérale de 365 à 510 µm.
